# EUROPEAN PATENT APPLICATION

(11) **EP 4 601 264 A1**
(43) Date of publication of application: **13.08.2025**
(21) Application number: 23893626.4
(22) Date of filing: 07.11.2023
(51) Int. Cl.: H04L 67/141

(54) **COMMUNICATION INTERACTION METHOD AND APPARATUS, DEVICE, AND STORAGE MEDIUM**

(30) Priority: 21.11.2022 CN 202211458449
(71) Applicant: Autel Intelligent Technology Corp. Ltd., Shenzhen, Guangdong 518055 (CN)
(72) Inventor: ZHAN, Jinyong, Shenzhen, Guangdong 518055 (CN)
(74) Representative: Harris, Oliver John Richard
(86) International application number: PCT/CN2023/130107
(87) International publication number: WO 2024/109535

(57) **Abstract**

The application provides a communication interaction method and apparatus, a device, and a storage medium. The method includes: in the case where a vehicle identification number of a target vehicle is acquired, acquiring a plurality of electronic control units and a plurality of communication parameters in the target vehicle according to the vehicle identification number, wherein the plurality of communication parameters include a communication parameter corresponding to each electronic control unit in the plurality of electronic control units; creating at least one communication link for the plurality of electronic control units according to the plurality of communication parameters, wherein one communication link corresponds to one communication parameter; and respectively performing parallel communication command interaction with the electronic control unit corresponding to each communication link by means of each communication link in the at least one communication link. By means of the technical solution, the duration of communication command interaction may be reduced, and the efficiency of communication with the electronic control units in the vehicle is improved.

## Description

### CROSS-REFERENCE TO RELATED APPLICATIONS

The application claims the priority of the Chinese patent application filed on November 21, 2022 before the CNIPA, China National Intellectual Property Administration with the application number of 2022114584493 and the title of "Communication Interaction Method and Apparatus, Device, and Storage Medium", which is incorporated herein in its entirety by reference.

### TECHNICAL FIELD

The application relates to the field of communications, and more particularly relates to a communication interaction method and apparatus, a device, and a storage medium.

### BACKGROUND

With the rapid development of the automobile industry, the progress of science and technology and the high demand of people, an automotive electronic technology has been continuously updated, and the number of electronic control units (ECUs) installed on an automobile increases to achieve different control functions.

The ECU has fault self-diagnosis and protection functions, and when a system is faulty, the ECU can automatically record a fault code in a random access memory (RAM) and turn on a fault light on an instrument panel for prompt. Fault information saved in the ECU may be read by means of an automobile diagnostic instrument, and the automobile diagnostic instrument may be connected to the automobile through an on board diagnostics (OBD) interface of the automobile, and communicates with the ECU in the automobile through the OBD interface, so as to acquire all the fault information in the automobile and parse the fault information to obtain information such as a current fault cause, a fault description and a fault state. At present, the automobile diagnostic instrument and the ECU of the automobile are based on a serial communication mode, namely, the automobile diagnostic instrument communicates with the ECUs one by one, and after finishing interaction with all communication commands between the automobile diagnostic instrument and a previous ECU one by one, the automobile diagnostic instrument performs interaction with communication commands between the automobile diagnostic instrument and a next ECU one by one, thereby consuming a relatively long time and being low in diagnosis efficiency.

### SUMMARY

The application provides a communication interaction method and apparatus, a device, and a storage medium to solve the technical problem that communication between an automobile diagnostic instrument and an ECU of an automobile consumes a relatively long time.

In a first aspect, provided is a communication interaction method, including:
in the case where a vehicle identification number (VIN) of a target vehicle is acquired, acquiring a plurality of electronic control units and a plurality of communication parameters in the target vehicle according to the vehicle identification number, wherein the plurality of communication parameters include a communication parameter corresponding to each electronic control unit in the plurality of electronic control units;
creating at least one communication link for the plurality of electronic control units according to the plurality of communication parameters, wherein one communication link corresponds to one communication parameter; and
respectively performing parallel communication command interaction with the electronic control unit corresponding to each communication link by means of each communication link in the at least one communication link.

In this technical solution, after the vehicle identification number of the vehicle is acquired, firstly the plurality of electronic control units and the communication parameters of the plurality of electronic control units in the vehicle are acquired according to the vehicle identification number of the vehicle; then the communication links are created for the plurality of electronic control units in the vehicle according to the communication parameter corresponding to each of the plurality of electronic control units, wherein one communication link corresponds to one communication parameter, so as to achieve classification of the electronic control units in the vehicle, and facilitate communication and transmission by allocating the electronic control units with the same communication parameters into one group; and finally the parallel communication command interaction with the plurality of electronic control units in the vehicle is performed by means of the created communication links, and the communication command interaction of the plurality of electronic control units in the vehicle is not dependent on each other, so that the duration of communication command interaction may be reduced, and the efficiency of communication with the electronic control units in the vehicle is improved.

In conjunction with the first aspect, the respectively performing parallel communication command interaction with the electronic control unit corresponding to each communication link by means of each communication link in the at least one communication link, includes: generating a communication command queue corresponding to each electronic control unit according to a communication command of each electronic control unit corresponding to a target communication link, wherein the target communication link is any one of the at least one communication link, and one communication command queue includes all the communication commands of one electronic control unit corresponding to the target communication link; and transmitting and processing the communication commands in the communication command queue corresponding to each electronic control unit in parallel by means of the target communication link. By arranging the communication commands of the electronic control units to form the communication command queue, the communication command interaction can be performed in an orderly manner; and the communication commands in each communication command queue are transmitted and processed in parallel by means of the communication links, and the communication command interaction between the electronic control units does not interfere with each other, so that the efficiency of the communication command interaction may be improved.

In conjunction with the first aspect, in one possible implementation mode, after the generating a communication command queue corresponding to each electronic control unit according to a communication command of each electronic control unit corresponding to a target communication link, the method further includes: in the case where a first communication command of a first electronic control unit is acquired, inserting the first communication command into a first communication command queue, wherein the first electronic control unit is any one of electronic control units corresponding to the target communication link, the first communication command is a newly added communication command, and the first communication command queue is a communication command queue corresponding to the first electronic control unit. When the newly added communication command for the electronic control unit is detected, the newly added communication command is inserted into the corresponding communication command queue, so that the newly added communication command can be processed, and the communication command interaction corresponding to the electronic control unit can be performed in an orderly manner.

In conjunction with the first aspect, in one possible implementation mode, the inserting the first communication command into a first communication command queue, includes:
inserting the first communication command at a position corresponding to a time sequence of the first communication command in the first communication command queue according to a time sequence precedence relationship between the first communication command and communication commands in the first communication command queue.

In conjunction with the first aspect, in one possible implementation mode, the transmitting and processing the communication commands in the communication command queue corresponding to each electronic control unit in parallel by means of the target communication link, includes: sending an ith communication command in the first communication command queue to the first electronic control unit by means of the target communication link, wherein the first electronic control unit is an electronic control unit corresponding to the first communication command queue, the first electronic control unit is any one of electronic control units corresponding to the target communication link, 1≤i≤N, and N is a total number of the communication commands in the first communication command queue; and in the case where an ith reply response corresponding to the ith communication command sent by the first electronic control unit is received, processing the ith reply response, and sending an (i+1)th communication command in the first communication command queue to the first electronic control unit by means of the target communication link. By sequentially processing the communication commands in the communication command queue, ordered interaction of the communication commands can be achieved.

In conjunction with the first aspect, in one possible implementation mode, the method further includes: after a reply response corresponding to a last communication command in the first communication command queue is received, generating a communication command processing result of the first electronic control unit according to processing results of all the reply responses corresponding to the first communication command queue. After the communication commands in one communication command queue are processed, the communication command processing result of the electronic control unit is generated according to the processing results of all the reply responses corresponding to the communication command queue, so as to achieve timely feedback on communication command interaction results.

In conjunction with the first aspect, in one possible implementation mode, the sending an ith communication command in the first communication command queue to the first electronic control unit by means of the target communication link, includes: sending the ith communication command in the first communication command queue to the first electronic control unit by means of the target communication link based on a first thread; and the processing the ith reply response, and sending an (i+1)th communication command in the first communication command queue to the first electronic control unit by means of the target communication link, includes: processing the ith reply response based on a second thread, and sending the (i+1)th communication command in the first communication command queue to the first electronic control unit by means of the target communication link based on the first thread, wherein the second thread and the first thread are different threads. The efficiency of the communication command interaction can be improved by completing the transceiving of the communication commands and data processing by means of the different threads.

In conjunction with the first aspect, in one possible implementation mode, the communication command is used for acquiring fault information of the target vehicle; and the method further includes: after the communication commands in the communication command queue corresponding to each communication link are all transmitted and processed, generating a fault detection report corresponding to the target vehicle according to all the fault information acquired based on all the transmitted communication commands. After all the communication commands are processed, the fault detection report of the vehicle is generated, thereby being conducive to the understanding of all the fault information of the vehicle by a user.

In a second aspect, provided is a communication interaction apparatus, including:
an configuration acquisition module configured to: in the case where a vehicle identification number of a target vehicle is acquired, acquire a plurality of electronic control units and a plurality of communication parameters in the target vehicle according to the vehicle identification number, wherein the plurality of communication parameters include a communication parameter corresponding to each electronic control unit in the plurality of electronic control units;
a link creation module configured to create at least one communication link for the plurality of electronic control units according to the plurality of communication parameters, wherein one communication link corresponds to one communication parameter; and
a parallel interaction module configured to respectively perform parallel communication command interaction with the electronic control unit corresponding to each communication link by means of each communication link in the at least one communication link.

In a third aspect, provided is a computer device, including a memory and one or more processors, wherein the memory is connected to the one or more processors, the one or more processors are configured to execute one or more computer programs stored in the memory, and the one or more processors, when executing the one or more computer programs, cause the computer device to implement the above communication interaction method in the first aspect.

In a fourth aspect, provided is a computer-readable storage medium storing a computer program, wherein the computer program includes a program instruction, and the above program instruction, when executed by a processor, causes the above processor to execute the above communication interaction method in the first aspect.

The application may achieve the following technical effects: the duration of the communication command interaction is reduced, and the efficiency of communication with the electronic control units in the vehicle is improved.

### BRIEF DESCRIPTION OF THE DRAWINGS

FIG. 1 is a schematic diagram of a system architecture of an automobile communication system provided in an example of the application;
FIG. 2 is a schematic flow diagram of a communication interaction method provided in an example of the application;
FIG. 3 is a schematic diagram of interaction between an upper-tier application and a core communication module of an automobile diagnostic instrument in an example of the application;
FIG. 4A to FIG. 4D are schematic diagrams of communication command queues provided in examples of the application;
FIG. 5 is a schematic flow diagram of transmitting and processing communication commands in one communication command queue over a communication link provided in an example of the application;
FIG. 6 is a schematic structural diagram of a communication interaction apparatus provided in an example of the application; and
FIG. 7 is a schematic structural diagram of a computer device provided in an example of the application.

### DETAILED DESCRIPTION OF THE INVENTION

The technical solutions in examples of the application will be described below in conjunction with accompanying drawings in the examples of the application.

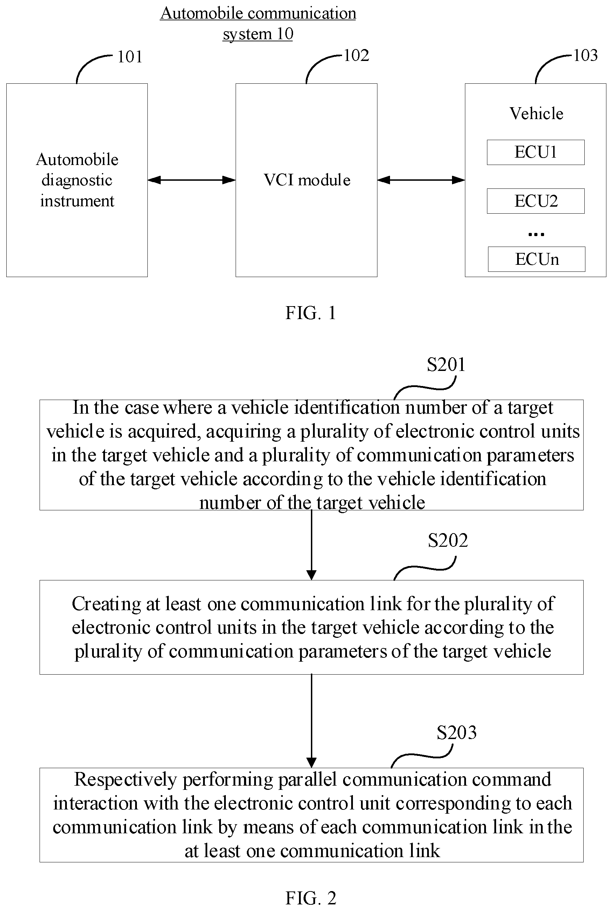

The technical solutions of the application may be applicable to an automobile communication scene, and specifically applicable to a scene in which an automobile diagnostic instrument communicates with a vehicle. In order to facilitate understanding, a communication architecture of the application will be firstly introduced. With reference to FIG. 1, FIG. 1 is a schematic diagram of a system architecture of an automobile communication system provided in an example of the application. As shown in FIG. 1, the automobile communication system 10 includes an automobile diagnostic instrument 101, a vehicle communication interface (VCI) module 102 and a vehicle 103, wherein the automobile diagnostic instrument 101 is connected to the vehicle 103 by means of the VCI module 102, and wherein the automobile diagnostic instrument 101 may also be referred to as an automobile decoder used for communicating with an ECU in the vehicle 103 by means of a communication module such as a controller area network (CAN) communication module or a local interconnect network (LIN) communication module, and transmitting a fault code and engine state information of the vehicle 103, so as to achieve fault scanning detection of the vehicle 103; and the automobile diagnostic instrument 101 may also be used for vehicle ECU positioning, vehicle ECU data backup and data restoration, and the like for the vehicle 103. The VCI module 102 is an automobile communication connection tool used for being connected to an OBD interface of the vehicle 103 to construct communication connection between the automobile diagnostic instrument 101 and the vehicle 103. The VCI module 102 may be connected to the automobile diagnostic instrument 101 in the modes of Bluetooth, a universal serial bus (USB), WiFi, and the like. The VCI module 102 is connected to the OBD interface of the vehicle by means of a diagnostic main line. The vehicle 103 includes a plurality of ECUs, wherein the ECU consists of integrated circuits such as a microcontroller unit (MCU), an RAM, a read only memory (ROM) and an input/output interface, and different ECUs may be disposed at different mechanical apparatuses of the vehicle for detecting operation conditions of the different mechanical apparatuses and recording fault conditions of the different mechanical apparatuses. Specifically, the ECU may be disposed on the mechanical apparatus such as an engine and an anti-lock braking system of the vehicle 103.

Based on the system architecture shown in FIG. 1, the detection of fault information of the vehicle may be achieved. In some current solutions, the fault detection is performed by means of serial communication between the automobile diagnostic instrument 101 and the ECUs in the vehicle 103, namely, the automobile diagnostic instrument 101 performs communication command interaction with the ECUs one by one according to a precedence order, sends communication commands one by one and receives reply responses of the communication commands, sends the next communication command after receiving the reply response of the previous communication command, and performs communication interaction with the next ECU to obtain the fault information recorded in the next ECU after the communication interaction with the previous ECU is finished and the fault information recorded in the previous ECU is obtained. The number of the ECUs in the vehicle 103 is relatively large, so that a relatively long time is required to acquire all the fault information in the vehicle 103 in this mode, and the communication efficiency is low.

In view of this, the application provides a communication interaction method, including: grouping ECUs of a vehicle according to communication parameters of the ECUs in the vehicle, dividing the ECUs with the same communication parameters into one group, and creating communication links matching the communication parameters of the ECUs for transmitting communication commands of the ECUs with the same communication parameters; and in the same communication link, performing parallel transmission and interaction on the communication commands of the ECU corresponding to the communication link, so that the communication command interaction of the ECU does not interfere with each other, thereby reducing the communication interaction time, and improving the communication efficiency.

The technical solutions of the application are specifically introduced below.

With reference to FIG. 2, FIG. 2 is a schematic flow diagram of a communication interaction method provided in an example of the application, and the method may be applied to the above automobile diagnostic instrument 101. As shown in FIG. 2, the method includes the following steps:
S201. in the case where a vehicle identification number of a target vehicle is acquired, acquiring a plurality of electronic control units in the target vehicle and a plurality of communication parameters of the target vehicle according to the vehicle identification number of the target vehicle;
wherein the target vehicle is a vehicle which has established physical connection with the automobile diagnostic instrument by means of an VCI module. After establishing the physical connection with the target vehicle, the VCI module may turn on an ignition key of the target vehicle to start functional devices such as an engine of the target vehicle, so that communication connection is established between the automobile diagnostic instrument and the target vehicle, so as to acquire the vehicle identification number of the target vehicle.

The plurality of electronic control units in the target vehicle refer to a plurality of electronic control units with which communication is required for currently executing a certain task. For example, the automobile diagnostic instrument currently executes fault scanning for the target vehicle, objects of the fault scanning are all the electronic control units in the target vehicle, and then the plurality of electronic control units refer to all the electronic control units in the target vehicle. For another example, the automobile diagnostic instrument currently executes data backup for some of the electronic control units in the target vehicle, and then the plurality of electronic control units refer to the electronic control units which need data backup in the target vehicle. The number of the electronic control units depends on the task to be executed currently.

The plurality of communication parameters of the target vehicle include a communication parameter corresponding to each electronic control unit in the plurality of electronic control units in the target vehicle. The communication parameter corresponding to the electronic control unit refers to a parameter required to be adopted/followed for communication with the electronic control unit, and the communication parameter corresponding to the electronic control unit may include a communication protocol, a communication pin, a Baud rate, a time parameter, a communication command filling format, and the like adopted for communication with the electronic control unit.

Specifically, in the case where the vehicle identification number of the target vehicle is acquired, a model of the target vehicle may be obtained by parsing according to the vehicle identification number of the target vehicle, then a preset diagnosis database may be queried according to the model of the target vehicle to obtain all system sets and system configuration of the target vehicle, then a list of electronic control units may be acquired from all the system sets to obtain a plurality of electronic control units, and communication parameters of the plurality of electronic control units may be acquired from the system configuration.

S202. Creating at least one communication link for the plurality of electronic control units in the target vehicle according to the plurality of communication parameters of the target vehicle;
wherein one communication link corresponds to one communication parameter, and different communication links correspond to different communication parameters. If the communication parameters of the plurality of electronic control units in the target vehicle are the same, the plurality of electronic control units share the same communication link. The purpose of creating at least one communication link for the plurality of electronic control units in the target vehicle is to group the plurality of electronic control units in the target vehicle and construct an environment required for communication for the electronic control units in the same group; and
wherein a process of creating the communication link for the target vehicle may include filtering the ECU, and any one of target communication links in the at least one communication link is required to be set to allow to receive a communication message sent by the ECU corresponding to the target communication link, namely, one communication link is used for receiving the communication message sent by the ECU with a communication parameter the same as the communication parameter corresponding to the communication link.

In specific implementation, one electronic control unit may be selected from the plurality of electronic control units in the target vehicle as a target electronic control unit, and a target communication link matching a communication parameter of the target electronic control unit is created according to the communication parameter of the target electronic control unit; then electronic control units with communication parameters the same as the communication parameter of the target electronic control unit are determined according to communication parameters of other electronic control units in the target vehicle to form a first electronic control unit combination with the target electronic control unit; and finally the target communication link is set to allow to receive communication messages sent by the electronic control units in the first electronic control unit combination, so as to obtain one communication link. Communication links are created for electronic control units which have not been allocated into the electronic control unit combination in the target vehicle in the same mode until all the electronic control units in the target vehicle have corresponding communication links, and one or more communication links may be obtained. It should be understood that except that request addresses and reply addresses are different, other communication parameters are the same for each electronic control unit in the same electronic control unit combination.

It should be noted that the mode of creating the communication link in the application is basically the same as the principle of creating the communication link by serial communication between the automobile diagnostic instrument and the vehicle, with the difference that one communication link created when the automobile diagnostic instrument performs serial communication with the vehicle is allowed to receive a message of only one electronic control unit simultaneously; and in the application, since a plurality of communication links are created, and each communication link is allowed to receive messages of a plurality of electronic control units simultaneously, communication interaction with all the control units in the target vehicle is performed simultaneously.

S203. Respectively performing parallel communication command interaction with the electronic control unit corresponding to each communication link by means of each communication link in the at least one communication link;
wherein performing parallel communication command interaction with the electronic control unit corresponding to the communication link by means of the communication link refers to that for each created communication link, the communication commands of all the electronic control units corresponding to the communication link are transmitted in parallel by means of the communication link. The communication command of each electronic control unit may be acquired by an upper-tier application executing a certain task in the automobile diagnostic instrument, and after the upper-tier application of the automobile diagnostic instrument acquires the communication command of each electronic control unit, the communication command of each electronic control unit may be sent to a core communication module of the automobile diagnostic instrument. For example, the automobile diagnostic instrument currently performs a fault scanning task for a BMW automobile, and then the upper-tier application may refer to BMW diagnostic software in the automobile diagnostic instrument. The core communication module in the automobile diagnostic instrument may be, for example, a multi-channel communication module.

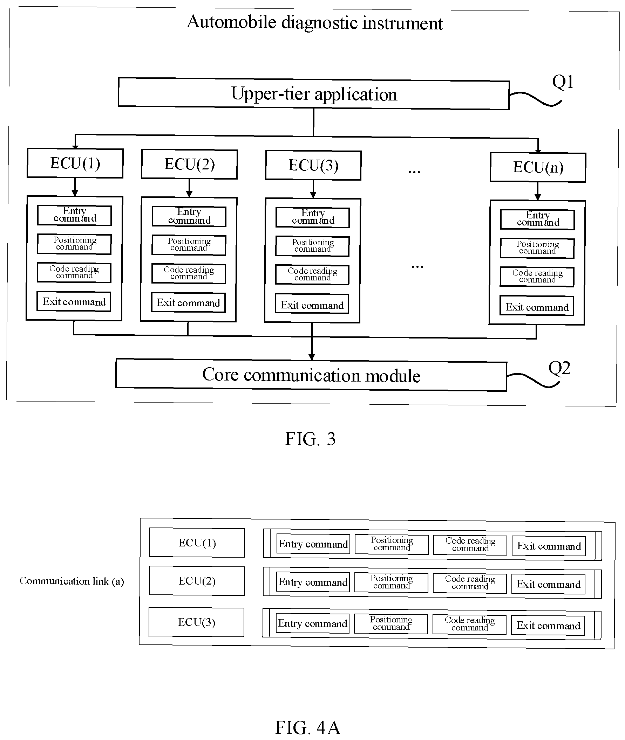

Taking the automobile diagnostic instrument executing a vehicle fault scanning service as an example, as shown in FIG. 3, after traversing to obtain all the ECUs (ECU1, ECU2, ECU3... ECUn) of the target vehicle, the upper-tier application Q1 of the automobile diagnostic instrument respectively acquires an entry command, a positioning command, a code reading command and an exit command of each ECU, and provides the commands to the core communication module Q2.

Each communication link transmits the communication commands of all the electronic control units corresponding to the communication link in parallel in the same mode. In one feasible mode, for one of the communication links, the parallel transmission of the communication command of each ECU may be completed in a mode of sequentially forming the command of each ECU corresponding to the communication link into a queue.

Specifically, the parallel transmission over the communication link may be achieved by the following steps A1 to A2.

Al. Generating a communication command queue corresponding to each electronic control unit corresponding to a target communication link according to a communication command of each electronic control unit corresponding to the target communication link,
wherein the target communication link may be any one of the at least one communication link created in the above step S201.

One communication command queue includes all the communication commands of one electronic control unit corresponding to the target communication link.

Specifically, the communication command of each electronic control unit corresponding to the target communication link may be arranged into the communication command queue according to a command execution precedence order.

Still taking the automobile diagnostic instrument executing the vehicle fault scanning service as an example, assuming that communication parameters of ECU1, ECU2 and ECU3 in FIG. 3 are the same, and the communication link created for the ECU1, the ECU2 and the ECU3 is a communication link a, a communication command queue corresponding to the generated communication link a may be as shown in FIG. 4A.

By performing the processing of step A1 on the electronic control unit corresponding to each communication link, the communication command queue corresponding to each communication link may be obtained.

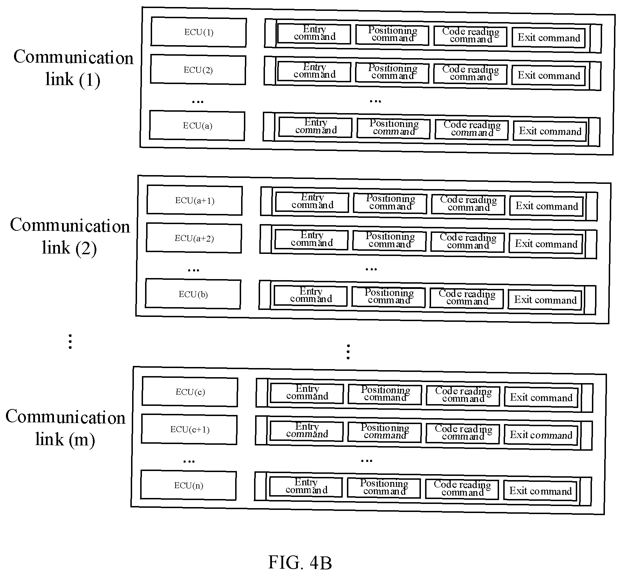

Still taking the automobile diagnostic instrument executing the vehicle fault scanning service as an example, assuming that a total of m communication links are created according to the communication parameters of the ECUs in FIG. 3, the communication command queues corresponding to the m communication links may be as shown in FIG. 4B.

In some possible cases, the upper-tier application of the automobile diagnostic instrument may also newly add communication commands to the core communication module of the electronic control unit. After the above step A1, the method may further include: in the case where a first communication command of a first electronic control unit is acquired, inserting the first communication command into a first communication command queue,
wherein the first electronic control unit is any one of electronic control units corresponding to the target communication link, the first communication command is a newly added communication command, the first communication command queue is a communication command queue corresponding to the first electronic control unit, and the newly added communication command is generally not in the first communication command queue.

Specifically, the first communication command may be inserted at a position corresponding to a time sequence of the first communication command in the first communication command queue according to a time sequence precedence relationship between the first communication command and communication commands in the first communication command queue.

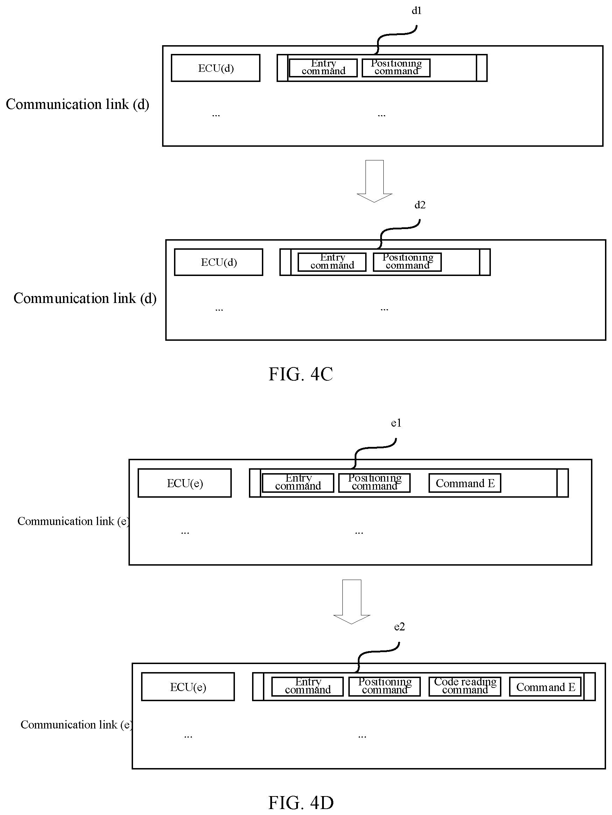

For example, with reference to FIG. 4C, assuming that the first electronic control unit is an ECU(d) in FIG. 4C, the communication command queue created for the ECU(d) according to the communication command of the ECU(d) is as shown in d1 in FIG. 4C; assuming that after the entry command of the ECU(d) is sent to the ECU(d) by means of a communication link (d), the upper-tier application sends a code reading command of the ECU(d) to the core communication module, since a time sequence of the code reading command is after a time sequence of a positioning command, the code reading command of the ECU(d) is inserted at the position after the positioning command, namely, at a tail of the communication command queue. After the code reading command is inserted at the tail of the communication command queue of ECU(d), the communication command queue of the ECU(d) is as shown in d2 in FIG. 4C.

For another example, with reference to FIG. 4D, assuming that the first electronic control unit is an ECU(e) in FIG. 4D, the communication command queue created for the ECU(e) according to the communication command of the ECU(e) is as shown in e1 in FIG. 4C; assuming that the upper-tier application sends a code reading command of the ECU(e) to the core communication module, a time sequence of the code reading command is after the time sequence of the positioning command and before a time sequence of a command E, the code reading command is inserted after the code reading command and before the command E. After the code reading command is inserted into the communication command queue of the ECU(e), the communication command queue of the ECU(e) is as shown in e2 in FIG. 4C.

It should be understood that the newly added communication command may occur at any stage of parallel communication command interaction between the automobile diagnostic instrument and the target vehicle. The newly added communication command is inserted into the corresponding communication command queue, so that the newly added communication command can be processed, and the communication command interaction corresponding to the electronic control unit can be performed in an orderly manner.

A2. Transmitting and processing the communication commands in the communication command queue corresponding to each electronic control unit corresponding to the target communication link in parallel by means of the target communication link;
wherein transmitting and processing the communication commands in the communication command queue corresponding to each electronic control unit corresponding to the target communication link in parallel refers to sequentially sending the communication commands in the command queue corresponding to each electronic control unit corresponding to the target communication link, and respectively receiving reply responses in the command queue corresponding to each electronic control unit corresponding to the target communication link. The sending of the communication commands and the receiving of the reply responses in each command queue do not interfere with each other.

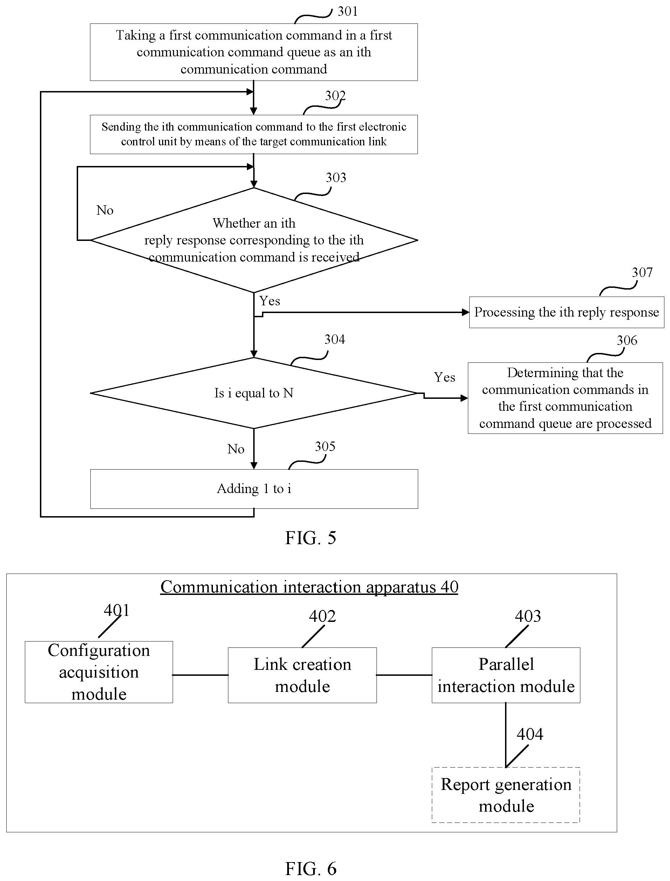

Taking the target communication link being a communication link (a) of the above FIG. 4A as an example, a process of transmitting and processing the communication commands in the communication command queue corresponding to each electronic control unit corresponding to the target communication link in parallel is as follows: sequentially sending entry commands to the ECU1, the ECU2 and the ECU3, and when an entry reply response sent by the ECU1 is received, sending a positioning command to the ECU1; when an entry reply response sent by the ECU2 is received, sending a positioning command to the ECU2... until exit commands of the ECU1 to the ECU3 have all been sent, and reply responses corresponding to the exit commands of the ECU1 to the ECU3 are received;
wherein for one communication command queue corresponding to the target communication link, reference may be made to FIG. 5 for a specific flow of transmitting and processing the communication command queue over the target communication link, and FIG. 5 is a schematic flow diagram of transmitting and processing communication commands in one communication command queue over a communication link provided in an example of the application. As shown in FIG. 5, the flow may include the following steps:
301. taking a first communication command in a first communication command queue as an ith communication command;
wherein the first communication command queue is a communication command queue corresponding to the first electronic control unit, and the first electronic control unit is any one of electronic control units corresponding to the target communication link;
302. sending the ith communication command to the first electronic control unit by means of the target communication link;
303. determining whether an ith reply response corresponding to the ith communication command is received;
in the case where the ith reply response corresponding to the ith communication command is received, executing step 304 and step 307; and in the case where the ith reply response corresponding to the ith communication command is not received, continuing to execute step 303;
304. determining whether i is equal to N;
wherein N is a total number of communication commands contained in the first communication command queue;
when i is equal to N, indicating that a reply response corresponding to a last communication command in the first communication command queue has been received, and executing step 306; and when i is not equal to N, indicating that there are communication commands which have not been sent in the first communication command queue, and executing step 305;
305. adding 1 to i, and returning to execute step 302;
306. determining that the communication commands in the first communication command queue are processed; and
307. processing the ith reply response.

Specifically, response data may be acquired from the ith reply response and analyzed to complete the processing of the ith reply response.

Communication command interaction with the electronic control unit may be completed by respectively processing each communication command queue corresponding to each communication link according to the above steps 301 to 307.

By sequentially processing the communication commands in the communication command queue, ordered interaction of the communication commands can be achieved.

In some possible cases, the above steps 301 to 306 may be executed by a first thread; and the above step 307 may be executed by a second thread, wherein the first thread and the second thread are two different threads. By completing the transceiving and processing of the communication commands by the different threads, the efficiency of communication command interaction can be improved.

In some possible cases, the processing of communication commands in different communication command queues may also be completed by different threads.

In some possible cases, after the above step 306, the flow may further include: generating a communication command processing result of the electronic control unit corresponding to the first communication command queue according to processing results of all the reply responses corresponding to the first communication command queue;
wherein the communication command processing result refers to a result of executing a certain task for the electronic control unit corresponding to the first communication command queue. Taking the automobile diagnostic instrument executing the vehicle fault scanning service as an example, the communication command processing result of the electronic control unit corresponding to the first communication command queue refers to fault information of the electronic control unit corresponding to the first communication command queue.

After the communication commands in one communication command queue are processed, the communication command processing result of the electronic control unit is generated according to all the reply responses corresponding to the communication command queue, so as to achieve timely feedback on a communication command interaction result.

In the technical solution corresponding to the above FIG. 1, after the vehicle identification number of the vehicle is acquired, firstly the plurality of electronic control units and the communication parameters of the plurality of electronic control units in the vehicle are acquired according to the vehicle identification number of the vehicle; then the communication links are created for the plurality of electronic control units in the vehicle according to the communication parameter corresponding to each of the plurality of electronic control units, wherein one communication link corresponds to one communication parameter, so as to achieve classification of the electronic control units in the vehicle, and facilitate communication and transmission by allocating the electronic control units with the same communication parameters into one group; and finally the parallel communication command interaction with the plurality of electronic control units in the vehicle is performed by means of the created communication links, and the communication command interaction of the plurality of electronic control units in the vehicle is not dependent on each other, so that the duration of communication command interaction may be reduced, and the efficiency of communication with the electronic control units in the vehicle is improved.

In some specific implementation scenes, the communication commands in the above solution of FIG. 1 may be communication commands used for acquiring fault information of the target vehicle. The above method of FIG. 1 may further include: after the communication commands in the communication command queue corresponding to each communication link are all transmitted and processed, generating a fault detection report corresponding to the target vehicle according to all the fault information acquired based on all the transmitted communication commands;
wherein the communication commands in the communication command queue corresponding to each communication link being all transmitted and processed refers to reply responses corresponding to all the communication commands being received and the processing of all the reply responses being completed. All the communication commands refer to communication commands in all the communication command queues. Taking FIG. 3A as an example, all the communication commands include communication commands of the ECU1 to the ECUn.

Specifically, all the fault information of the target vehicle may be obtained according to the fault information contained in the reply responses corresponding to all the communication commands, so as to generate the fault detection report corresponding to the target vehicle.

After the communication command of each electronic control unit is transmitted and processed in parallel, the fault detection report of the vehicle is generated, thereby being conducive to the understanding of all the fault information of the vehicle by a user.

In some other possible cases, in the case where the electronic control units in the target vehicle supports broadcast instructions, for the above step S203 in FIG. 1, the broadcast instruction may also be sent to each electronic control unit by means of each communication link, and an instruction response sent by each electronic control unit in response to the broadcast instruction is received, so as to achieve parallel communication command interaction with each electronic control unit, and then acquire data of each electronic control unit in the target vehicle.

The method of the application is introduced above, and an apparatus of the application is introduced below.

With reference to FIG. 6, FIG. 6 is a schematic structural diagram of a communication interaction apparatus provided in an example of the application, wherein the communication interaction apparatus may be the aforementioned automobile diagnostic instrument 101. As shown in FIG. 6, the communication interaction apparatus 40 includes:
an configuration acquisition module 401 configured to: in the case where a vehicle identification number of a target vehicle is acquired, acquire a plurality of electronic control units and a plurality of communication parameters in the target vehicle according to the vehicle identification number, wherein the plurality of communication parameters include a communication parameter corresponding to each electronic control unit in the plurality of electronic control units;
a link creation module 402 configured to create at least one communication link for the plurality of electronic control units according to the plurality of communication parameters, wherein one communication link corresponds to one communication parameter; and
a parallel interaction module 403 configured to respectively perform parallel communication command interaction with the electronic control unit corresponding to each communication link by means of each communication link in the at least one communication link.

In a possible design, the above parallel interaction module 403 is specifically configured to generate a communication command queue corresponding to each electronic control unit according to a communication command of each electronic control unit corresponding to a target communication link, wherein the target communication link is any one of the at least one communication link, and one communication command queue includes all the communication commands of one electronic control unit corresponding to the target communication link; and transmit and process the communication commands in the communication command queue corresponding to each electronic control unit in parallel by means of the target communication link.

In a possible design, the above parallel interaction module 403 is further configured to: in the case where a first communication command of a first electronic control unit is acquired, insert the first communication command into a first communication command queue, wherein the first electronic control unit is any one of electronic control units corresponding to the target communication link, the first communication command is a newly added communication command, and the first communication command queue is a communication command queue corresponding to the first electronic control unit.

In a possible design, the above parallel interaction module 403 is specifically configured to insert the first communication command at a position corresponding to a time sequence of the first communication command in the first communication command queue according to a time sequence precedence relationship between the first communication command and communication commands in the first communication command queue.

In a possible design, the above parallel interaction module 403 is specifically configured to send an ith communication command in the first communication command queue to the first electronic control unit by means of the target communication link, wherein the first electronic control unit is an electronic control unit corresponding to the first communication command queue, the first electronic control unit is any one of electronic control units corresponding to the target communication link, 1≤i≤N, and N is a total number of the communication commands in the first communication command queue; and in the case where an ith reply response corresponding to the ith communication command sent by the first electronic control unit is received, process the ith reply response, and send an (i+1)th communication command in the first communication command queue to the first electronic control unit by means of the target communication link.

In a possible design, the above parallel interaction module 403 is further configured to: after a reply response corresponding to a last communication command in the first communication command queue is received, generate a communication command processing result of the first electronic control unit according to processing results of all the reply responses corresponding to the first communication command queue.

In a possible design, the above parallel interaction module 403 is specifically configured to send the ith communication command in the first communication command queue to the first electronic control unit by means of the target communication link based on a first thread; and process the ith reply response based on a second thread, and send the (i+1)th communication command in the first communication command queue to the first electronic control unit by means of the target communication link based on the first thread, wherein the second thread and the first thread are different threads.

In one possible design, the communication command is used for acquiring fault information of the target vehicle; and the above apparatus further includes a report generation module 404 configured to: after the communication commands in the communication command queue corresponding to each communication link are all transmitted and processed, generate a fault detection report corresponding to the target vehicle according to all the fault information acquired based on all the transmitted communication commands.

It should be noted that reference may be made to the description of the above method examples for the content which is not mentioned in the example corresponding to FIG. 6, which will not be described in detail herein.

For the above apparatus, after the vehicle identification number of the vehicle is acquired, firstly the plurality of electronic control units and the communication parameters of the plurality of electronic control units in the vehicle are acquired according to the vehicle identification number of the vehicle; then the communication links are created for the plurality of electronic control units in the vehicle according to the communication parameter corresponding to each of the plurality of electronic control units, wherein one communication link corresponds to one communication parameter, so as to achieve classification of the electronic control units in the vehicle, and facilitate communication and transmission by allocating the electronic control units with the same communication parameters into one group; and finally the parallel communication command interaction with the plurality of electronic control units in the vehicle is performed by means of the created communication links, and the communication command interaction of the plurality of electronic control units in the vehicle is not dependent on each other, so that the duration of communication command interaction may be reduced, and the efficiency of communication with the electronic control units in the vehicle is improved.

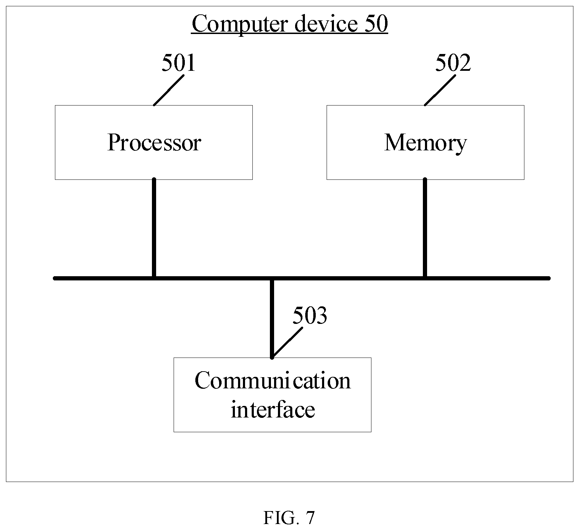

With reference to FIG. 7, FIG. 7 is a schematic structural diagram of a computer device provided in an example of the application, wherein the computer device may be the above automobile diagnostic instrument 101. The computer device 50 includes a processor 501, a memory 502 and a communication interface 503, wherein the memory 502 and the communication interface 503 are connected to the processor 501, for example, connected to the processor 501 by a bus.

The processor 501 is configured to support the computer device 50 to execute corresponding functions in the method in the above method example. The processor 501 may be a central processing unit (CPU), a network processor (NP), a hardware chip or any combination thereof. The above hardware chip may be an application specific integrated circuit (ASIC), a programmable logic device (PLD) or a combination thereof. The above PLD may be a complex programmable logic device (CPLD), a field-programmable gate array (FPGA), a generic array logic (GAL) or any combination thereof.

The memory 502 is configured to store program codes, and the like. The memory 502 may include a volatile memory (VM), such as a random access memory (RAM); the memory 502 may also include a non-volatile memory (NVM), such as a read-only memory (ROM), a flash memory, a hard disk drive (HDD) or a solid-state drive (SSD); and the memory 502 may also include a combination of the memories of the above types.

The communication interface 503 is configured to send a communication command or receive a reply response corresponding to the communication command under the direction of the processor 501. The communication interface 503 may be a hardware interface, such as a USB interface; and the communication interface 503 may also be a software interface, such as a Bluetooth interface and a WiFi interface, which is not limited herein.

The processor 501 may call the program codes to execute the following operation:
in the case where a vehicle identification number of a target vehicle is acquired, acquiring a plurality of electronic control units and a plurality of communication parameters in the target vehicle according to the vehicle identification number, wherein the plurality of communication parameters include a communication parameter corresponding to each electronic control unit in the plurality of electronic control units;
creating at least one communication link for the plurality of electronic control units according to the plurality of communication parameters, wherein one communication link corresponds to one communication parameter; and
respectively performing parallel communication command interaction with the electronic control unit corresponding to each communication link by means of each communication link in the at least one communication link.

An example of the application further provides a computer-readable storage medium storing a computer program, wherein the computer program includes a program instruction, and the program instruction, when executed by a computer, causes the computer to execute the method according to the above examples.

It will be understood by those ordinarily skilled in the art that the implementation of all or part of the flow of the methods in the above examples may be completed by the computer program instructing the associated hardware, the program may be stored in the computer-readable storage medium, and the program, when executed, may include the flow of the example of each method described above, wherein the storage medium may be a magnetic disk, an optical disk, a read-only memory (ROM) or a random access memory (RAM), and the like.

Although only the specific embodiments of the application have been described above, the scope of protection of the application is not limited thereto, any person skilled in the art would readily conceive of changes or substitutions within the technical scope disclosed in the application, and these changes or substitutions all should be included in the scope of protection of the application. Therefore, the scope of protection of the application should be defined by the scope of protection of the claims.

## Claims

1. A communication interaction method, **characterized by** comprising:
in the case where a vehicle identification number of a target vehicle is acquired, acquiring a plurality of electronic control units and a plurality of communication parameters in the target vehicle according to the vehicle identification number, wherein the plurality of communication parameters comprise a communication parameter corresponding to each electronic control unit in the plurality of electronic control units;
creating at least one communication link for the plurality of electronic control units according to the plurality of communication parameters, wherein one communication link corresponds to one communication parameter; and
respectively performing parallel communication command interaction with the electronic control unit corresponding to each communication link by means of each communication link in the at least one communication link.

2. The method according to claim 1, **characterized in that** the respectively performing parallel communication command interaction with the electronic control unit corresponding to each communication link by means of each communication link in the at least one communication link, comprises:
generating a communication command queue corresponding to each electronic control unit according to a communication command of each electronic control unit corresponding to a target communication link, wherein the target communication link is any one of the at least one communication link, and one communication command queue comprises all the communication commands of one electronic control unit corresponding to the target communication link; and
transmitting and processing the communication commands in the communication command queue corresponding to each electronic control unit in parallel by means of the target communication link.

3. The method according to claim 2, **characterized in that** after the generating a communication command queue corresponding to each electronic control unit according to a communication command of each electronic control unit corresponding to a target communication link, the method further comprises:
in the case where a first communication command of a first electronic control unit is acquired, inserting the first communication command into a first communication command queue, wherein the first electronic control unit is any one of electronic control units corresponding to the target communication link, the first communication command is a newly added communication command, and the first communication command queue is a communication command queue corresponding to the first electronic control unit.

4. The method according to claim 3, **characterized in that** the inserting the first communication command into a first communication command queue, comprises:
inserting the first communication command at a position corresponding to a time sequence of the first communication command in the first communication command queue according to a time sequence precedence relationship between the first communication command and communication commands in the first communication command queue.

5. The method according to claim 2, **characterized in that** the transmitting and processing the communication commands in the communication command queue corresponding to each electronic control unit in parallel by means of the target communication link, comprises:
sending an ith communication command in the first communication command queue to the first electronic control unit by means of the target communication link, wherein the first electronic control unit is an electronic control unit corresponding to the first communication command queue, the first electronic control unit is any one of electronic control units corresponding to the target communication link, 1≤i≤N, and N is a total number of the communication commands in the first communication command queue; and
in the case where an ith reply response corresponding to the ith communication command sent by the first electronic control unit is received, processing the ith reply response, and sending an (i+1)th communication command in the first communication command queue to the first electronic control unit by means of the target communication link.

6. The method according to claim 5, **characterized by** further comprising:
after a reply response corresponding to a last communication command in the first communication command queue is received, generating a communication command processing result of the first electronic control unit according to processing results of all the reply responses corresponding to the first communication command queue.

7. The method according to claim 5, **characterized in that** the sending an ith communication command in the first communication command queue to the first electronic control unit by means of the target communication link, comprises:
sending the ith communication command in the first communication command queue to the first electronic control unit by means of the target communication link based on a first thread; and
the processing the ith reply response, and sending an (i+1)th communication command in the first communication command queue to the first electronic control unit by means of the target communication link, comprises:
processing the ith reply response based on a second thread, and sending the (i+1)th communication command in the first communication command queue to the first electronic control unit by means of the target communication link based on the first thread, wherein the second thread and the first thread are different threads.

8. The method according to any one of claims 2 to 7, **characterized in that** the communication command is used for acquiring fault information of the target vehicle; and
the method further comprises:
after the communication commands in the communication command queue corresponding to each communication link are all transmitted and processed, generating a fault detection report corresponding to the target vehicle according to all the fault information acquired based on all the transmitted communication commands.

9. A communication interaction apparatus, **characterized by** comprising:
an configuration acquisition module configured to: in the case where a vehicle identification number of a target vehicle is acquired, acquire a plurality of electronic control units and a plurality of communication parameters in the target vehicle according to the vehicle identification number, wherein the plurality of communication parameters comprise a communication parameter corresponding to each electronic control unit in the plurality of electronic control units;
a link creation module configured to create at least one communication link for the plurality of electronic control units according to the plurality of communication parameters, wherein one communication link corresponds to one communication parameter; and
a parallel interaction module configured to respectively perform parallel communication command interaction with the electronic control unit corresponding to each communication link by means of each communication link in the at least one communication link.

10. A computer device, **characterized by** comprising a memory, a processor, and a communication interface, wherein the communication interface and the memory are connected to the processor, the processor is configured to execute one or more computer programs stored in the memory, and the processor, when executing the one or more computer programs, causes the computer device to implement the method according to any one of claims 1 to 8.

11. A computer-readable storage medium, **characterized by** storing a computer program, wherein the computer program comprises a program instruction, and the program instruction, when executed by a processor, causes the processor to execute the method according to any one of claims 1 to 8.
